Europäisches Patentamt

European Patent Office

Office européen des brevets

(11) Publication number: 0 292 875

A2

## (12) EUROPEAN PATENT APPLICATION

(21) Application number: 88108039.4

(22) Date of filing: 19.05.88

(51) Int. Cl.⁴ G01C 9/18 , G01C 9/06

(30) Priority: 27.05.87 IT 1590387
28.01.88 IT 1590188

(43) Date of publication of application:
30.11.88 Bulletin 88/48

(84) Designated Contracting States:
DE ES FR GB IT

(71) Applicant: Sansone, Innocenzo
Androna Santorio 3
I-34074 Monfalcone (GO)(IT)

Applicant: Snaidero, Luciano
Via Rizzatti 9
I-33050 Fiumicello (UD)(IT)

(72) Inventor: Sansone, Innocenzo
Androna Santorio 3
I-34074 Monfalcone (GO)(IT)
Inventor: Snaidero, Luciano
Via Rizzatti 9
I-33050 Fiumicello (UD)(IT)

(74) Representative: Petraz, Gilberto Luigi
G.L.P. S.a.s. di Gilberto Petraz P.le Cavedalis
6/2
I-33100 Udine(IT)

(54) Automatic device to indicate the horizontal position.

(57) Automatic device (10) to indicate the horizontal
position, which can indicate a horizontal or vertical
position or a position at a pre-determined angle and
can perform the functions of a level tube and which
comprises in reciprocal cooperation:
- electricity supply means (14),
- sensor means (11) able to monitor a spatial position of the device (10) and to emit electrical signals
according to that spatial postion,
- means (12) to process the information coming from
the sensor means (11), and
- acoustic and/or visual signalling means (13) which
represent that spatial position.

fig.2

## "AUTOMATIC DEVICE TO INDICATE THE HORIZONTAL POSITION"

This invention concerns an automatic device to indicate the horizontal position. To be more exact, the invention concerns an automatic device to indicate the horizontal position which has the purpose of replacing and/or improving the services provided by the usual level tubes employed to indicate the horizontal position, such as pocket level tubes, spirit levels, levels with protractor, etc.

The embodiments employed hitherto with the usual level tubes require suitable conditions of light if they are to work properly, and leave the accuracy of the measurement to the care of the operator, thus leading to errors of a variable amount, especially when the operator does not possess a reasonable capacity and operational independence.

It is known that various devices have been made so as to replace the normal water level tubes generally used at present. These devices in general give an indication either by employing the existing water level tubes or by having recourse to expensive sophisticated electrolytic level devices able to provide information about the horizontal position by means of the addition of a suitable electronic circuit.

The present invention tends to overcome the shortcomings of the state of the art by means of an indicator device possessing the features of the main claim. The dependent claims contain variants of the idea of the original embodiment.

Instead of leaving the senses of the operator to find the horizontal position, the invention uses to identify that position one or more mercury switches the accuracy and sensitiveness of which are predetermined and not affected by external phenomena.

It is known that there exist in commerce many types of mercury switches the accuracy characteristics of which in providing the horizontal position achieve values of the order of three minutes or three sixtieths of a degree, whereas a bricklayer's level tube can only claim an accuracy ranging from about five to ten minutes or five to ten sixtieths of a degree, the error of three minutes being equal to 0.87 mm. per running metre.

When the switch or switches emit a suitable electrical signal on reaching the horizontal position, an acoustic and/or luminous signal is generated to tell the operator that that position has been reached.

This effect is obtained by the simultaneous opening or closing of the contacts of a double-acting mercury switch or of two single-acting mercury switches placed at the limits of the switching position.

Whichever type of switch is used, the relative contacts are applied by a low-pass filter to a command logic to limit the current passing through the contacts and to make use of the conditions resulting from attainment of a horizontal position.

As we said before, the indicator actuated by the logic may be of an acoustic and/or luminous type.

The combination of both types of signalling device will facilitate the search for the horizontal position since by embodying the luminous indicator in two separate parts, each of which is coupled to one section of the double-acting mercury switch or to one of the single-acting mercury switches, it will be possible to determine the type of error in the positioning in relation to the horizontal.

It is a remarkable fact that with several double-acting switches or several pairs of single-acting switches available and arranged at any desired angle it is possible to measure as many positions.

Since in this embodiment upon reaching the horizontal position with any double-acting mercury switch or with any pair of single-acting mercury switches there will be only one pair of contacts simultaneously open or simultaneously closed, it will be enough to make the information flow together to multiple OR type or AND type gates so as to be able to make use only of the command logic referring to the embodiment by means of only one double-acting switch or only one pair of single-acting switches.

The whole logic can be realized by means of discrete and/or integrated elements in positive or negative logic.

The employment of two single-acting mercury switches according to the invention enables outstanding accuracy to be attained at considerable lower costs since it is enough to regulate mechanically the switching point of the two single switches, which can therefore be of a very inexpensive type.

The invention enables the accuracy of the most sophisticated known devices to be attained by using simple mercury switches of a low cost and not of a high quality as position transducers.

Moreover, by using information of a closed-open type the invention is free of the problems of thermal drift and degradation of characteristics unavoidably linked to all the other known analogue devices, which in the long run lead to lack of accuracy or ambiguity in measurements.

The attached figures, which are given as a non-restrictive example, show the following:-

Fig.1 shows with a block diagram a possible method of working of the device according to the invention;

Fig.2 shows an electrical diagram relating to the lay-out of Fig.1;

Fig.3 shows diagrammatically an application with two mercury switches;

Fig.4 shows a variant with one double-acting switch;

Fig.5 shows a possible mechanism for re-setting the switch;

Fig.6 shows a variant of the lay-out of Fig. 5;

Figs.7a to 7c show the method of working of a level means employing the device according to the invention;

Fig.8 shows a variant of the lay-out of Fig.1;

Figs.9 and 10 respectively show the command logic diagrams of AND and OR logic gates used in a device conforming to the invention;

Fig.11 gives an plan view of a further variant of the device according to the invention.

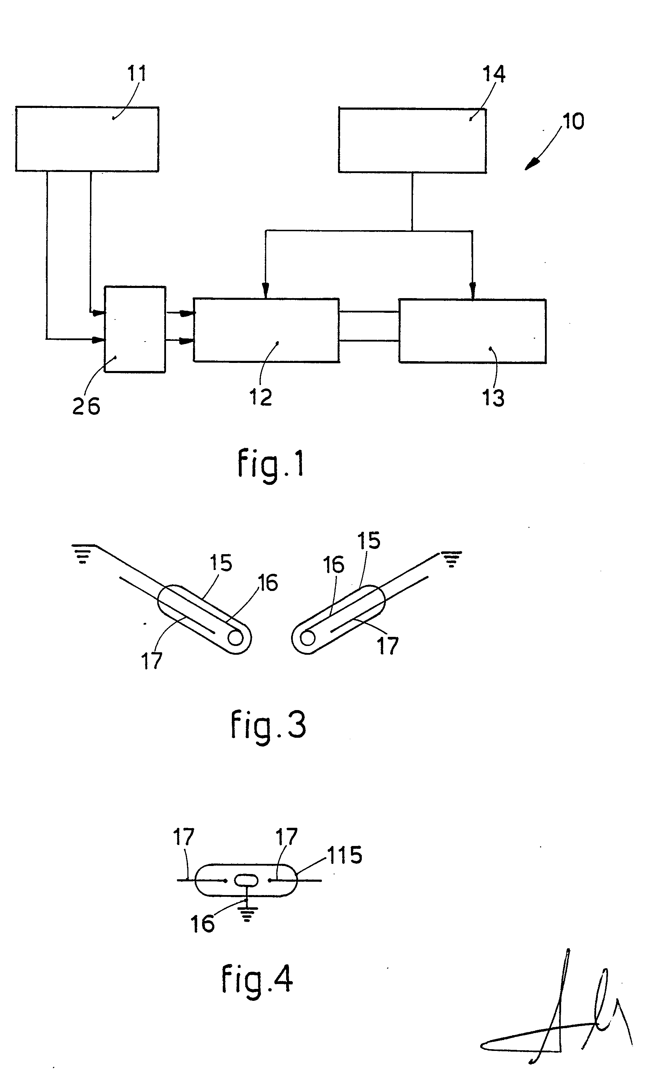

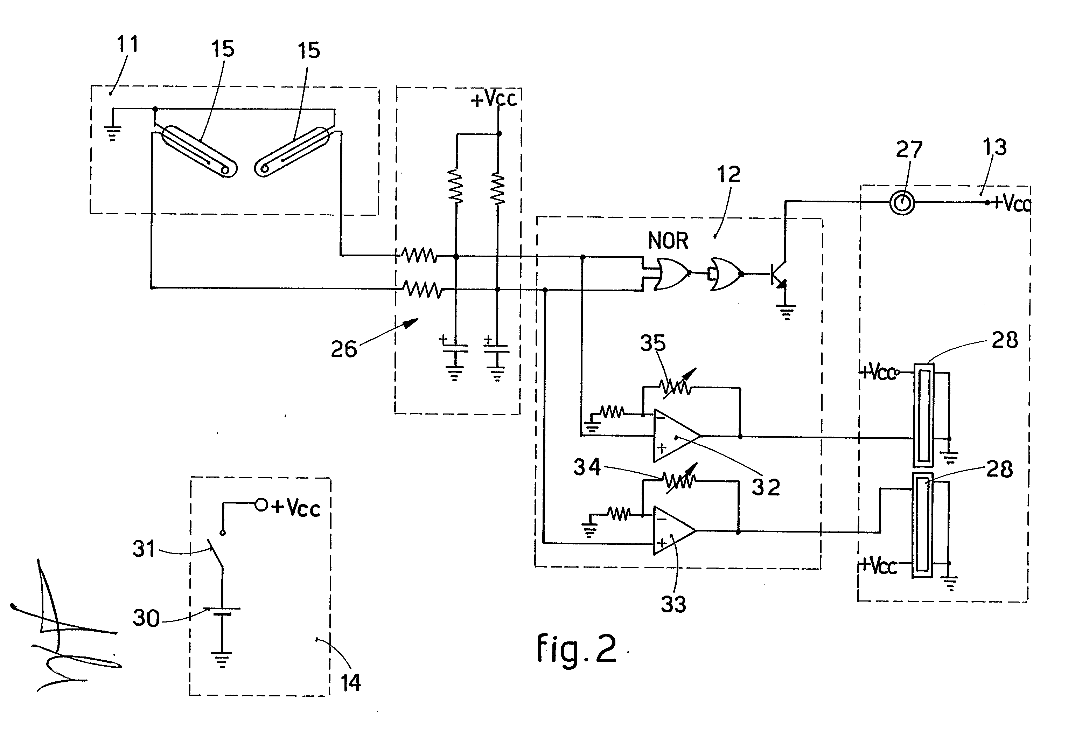

In Fig.1 the device in general bears the reference 10; a sensors block is referenced with 11, an information processing block with 12, an information block with 13 and an electricity supply block with 14.

The sensors block 11 consists of a mercury switch or mercury switches 15.

Only when the device is disposed in a horizontal position are the electrical contacts, connected to the mercury switches 15, open simultaneously, thus enabling, for instance, two simultaneously negative singles to be send to the information processing block 12.

When the information processing block 12 senses two simultaneously negative signals at its two inputs, it extinguishes the luminous signals which compose the information block 13, leaving alight only the two central signals and at the same time originating the actuation of a piezoelectric buzzer.

The electricity supply block 14 consists of an electric cell or battery.

A possible practical lay-out of the block diagram of Fig. 1 is shown in Fig. 2, in which the contacts of the switch 15 are employed to apply to a two-input NOR logic gate the signals which, controlling that logic gate, will arrange to actuate the acoustic and/or luminous indicator.

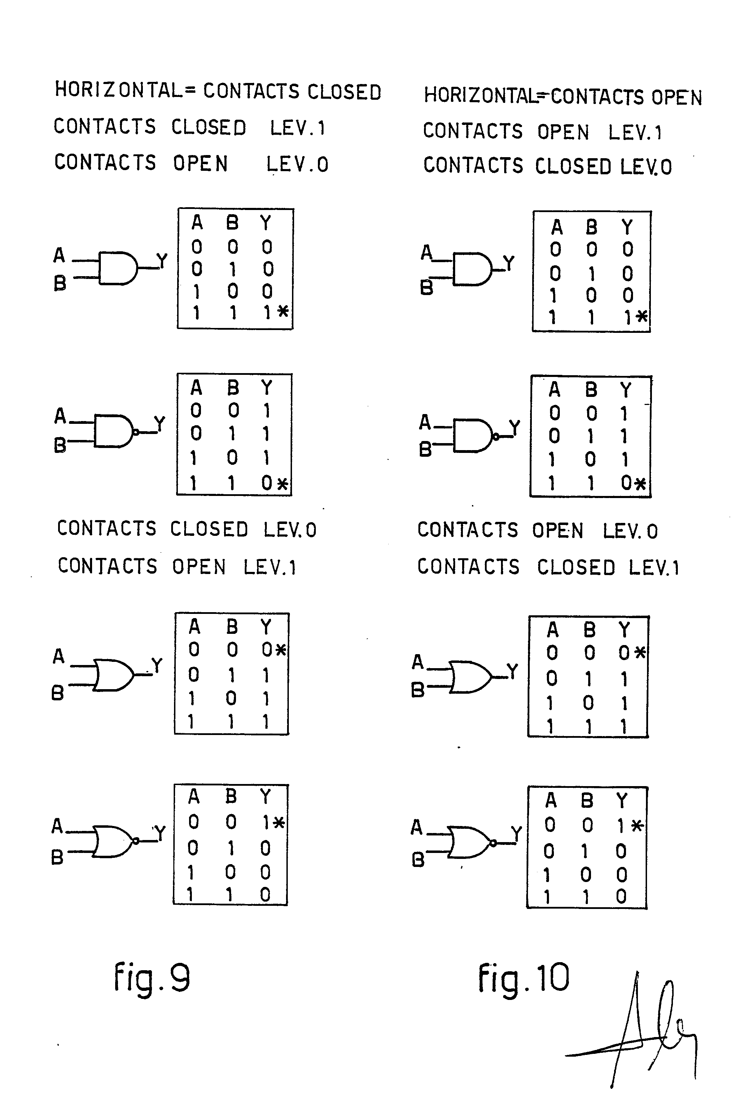

Since the possible practical lay-outs may offer open or closed contacts in the horizontal position and since it is possible to opt for the positive or the negative logic, Figs.9 and 10 summarize the possible combinations and indicate with an asterisk the values of the outputs for which the indicator is divided.

The logic gates may be realized either with discrete correspondents (diodes, resistors, transistors) or with integrated analogue or digital components.

The sensors block 11 consists advantageously of two mercury switches 15 positioned at the switching limits, as in Fig.3.

The upper electrodes 16 are connected to the negative pole of the electricity supply 14 of the device 10, and therefore there are negative signals on the other two electrodes 17 only in a phase of equilibrium.

It is obvious that this result can be also obtained with one single double-acting switch 115, as shown in Fig.4, but although the use of this switch 115 ensures an accuracy comparable to that obtainable with the embodiment of Fig.3, yet it entails an increase in production costs since doubleacting mercury switches 115 having differential angles of the order of 3 minutes are very expensive.

By a differential angle is meant here the angle covered by the double-acting mercury switch 115 in passing from the position of a central-left closed contact to the position of a central-right closed contact. This angle determines the ambiguity of the measurement.

Hereinafter for the sake of brevity we shall deal only with the use of single-acting mercury switches 15, in which the accuracy of the measurement depends only on the accuracy of regulation.

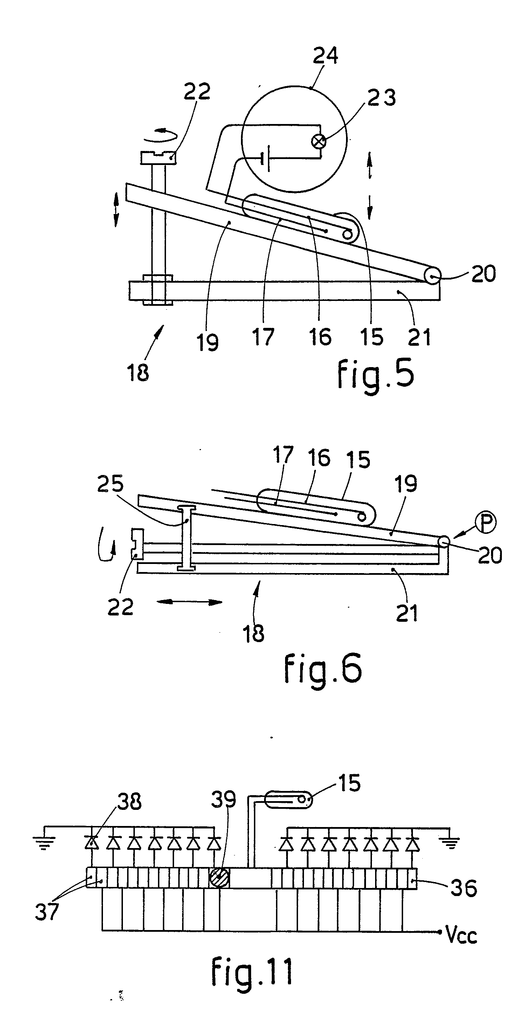

The limit switching position is obtained by the use of a regulation system 18. As an example, we give two possible regulation systems in Figs.5 and 6.

Fig. 5 shows the principle of the method of working of the first system of micrometric regulation. A switch 15 is positioned on an inclined surface 19 hinged at 20 in an adjustable manner on a body 21 of a level device; a screw 22 serves to provide the regulation.

At the beginning of the setting process the inclined surface 19 is placed in the position of maximum elevation and therefore the two contacts 16-17 of the mercury switch 15 are open and a light 23 of a setting control system 24 is switched off.

By acting on the screw 22 the inclined surface 19 is lowered and, when the limit of switching is reached, the light 23 of the setting control system 24 is switched on.

That position is then fixed by means of a cement and in this way a perfect correspondence is achieved between the horizontal position on which the body 21 of the level device has already been positioned and the limit position of the single-acting mercury switch 15. The same method is employed for the other mercury switch 15.

At the end of this operation, which will be performed separately or simultaneously on both mercury switches 15, the device will be accurately set.

It is a noteworthy fact that, as the ending of the regulation on reaching the limit position of switching of the switch is at the discretion of the person performing the setting, it is possible to obtain various classes of accuracy of the level devices.

Fig.6 shows a different system of mechanical regulation, but the same considerations are applicable to this system as are valid for the preceding system of Fig.5. The regulation is achieved here also by means of a micrometric screw 22.

In Fig.6 the angle of inclination has been purposely enlarged to show the principle of the method of working of the regulation system, but it is clear that the height of the slidable block 25 will be about equal to the height between the supporting surface and the point "P" at which the inclined surface 19 is pivoted.

In any event the action of the screw 22 compels the slidable block 25 to move backwards and forwards and therefore compels the inclined surface 19 to vary its position.

As we said earlier, the regulation methods, the system to control the setting and the considerations regarding the various classes of accuracy obtainable are the same as those cited for the system of Fig.5.

The information concerning the attainment of the horizontal level would be of little practical use if it were not handled suitably before reaching the information block 13.

In fact, during the employment of the level device there would appear essentially in the neighbourhood of the horizontal position:
- false information concerning the attainment of the horizontal position, due to the unavoidable vibrations transmitted to the level device;
-inability to determine the off-level position (indeed it would be impossible to know whether it would be necessary to raise or lower one end of the level device to reach the horizontal position) or to determine the tendency of the movement in relation to the horizontal position.

The task of the information processing block 12 is therefore to convert an indication of an open-closed type, provided by the mercury switches 15, into information which makes it easy for an operator to use the level device by suggesting the right actions to be performed to reach the horizontal position and to achieve the attainment of that position without ambiguity.

Both these objectives are attained by employing a low-pass filter located at the input of the information processing block 12.

This filter, which consists of a resistance-capacitance unit 26 (see Figs.1 and 2), prevents brief switchings of the mercury switches 15 from permitting the voltage applied to the logic circuits to assume the values required to provide an indication that the horizontal position has been reached.

Therefore, it is only when the horizontal position is reached in a stable enough manner and the voltage applied to the first logic stage permits the switching of the switches, that a signal usable for display of the attainment of the horizontal position will be available to the information block 13.

Besides the advantages cited earlier, the voltage at the output of the low-pass filter is able to provide information of an analogue type suitable to help the operator of the level device in obtaining the horizontal position.

In fact, the voltage at the output of the low-pass filter rises or drops slowly, depending on whether the mercury switch 15 is open or closed, and reaches a zero value when the horizontal position is reaches, with both switches closed.

If such a voltage is applied to the output of the filter, it will therefore provide increasing or decreasing information as the two extremes on each side of the horizontal position are approached, the voltage being reduced to nil only when the level device is in the horizontal position.

So as to signal this position fully, the information processing block 12 will feed the same signal simultaneously to each of the two parts forming the information block 13, which will therefore be lit symmetrically at the horizontal position.

This signal is also applied to a buzzer 27, which emits a suitable sound when the horizontal position is reached.

Figs.7a to 7c illustrate the above description.

The information block 13 is the block which provides a user with the information needed to enable the horizontal position to be reached easily and to indicate clearly that that position has been reached.

For this purpose the information block 13 consists of a display device and an acoustic signalling device.

The display device consists of two luminous segments 28-29 of which the illumination strengthens continuously with downward movement away from the horizontal position and diminishes continuously with upward movement away from the horizontal position until it disappears, as we said earlier and as is shown in Figs.7a to 7c.

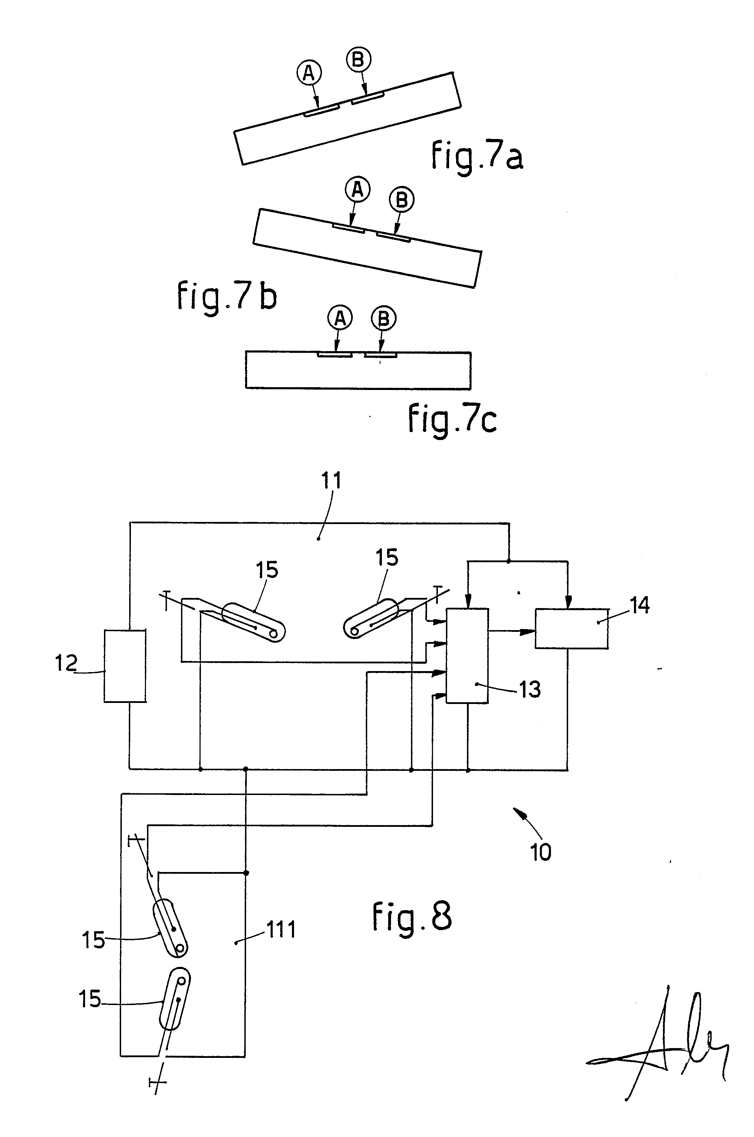

In the situation shown in Fig.7a in particular, the segment A tends to be lit while the segment B tends to be extinguished; in the situation of Fig.7B the segment A tends to be extinguished while the segment B tends to be lit; in the situation of Fig.7c the two segments A and B are lit symmetrically and the acoustic indicator emits a buzz.

In this way an operator knows at all times which way he has to operate to bring the system to the horizontal position.

When the horizontal position is reached in a stable manner, the two luminous segments are lit symmetrically and the acoustic signalling device 27, if connected up, emits a sound.

The inputs of the luminous segments 28-29 are controlled by operational amplifiers 32-33, between the output and negative input of which are connected gain potentiometers 34-35.

The advantage of such an information block 13 is that it enables operations to be performed in dark or badly lit environments and the operator to obtain information regarding the horizontal position even when the level device has to be out of sight.

Moreover, as we have already made clear, a display device of this type makes it possible to have a pseudo-analogue indication of the measurement to be performed even when starting with a system of position sensors of an open-closed type.

The electricity supply block 14 consists of a cell or battery 30 of a type which is commercially available and can be replaced when it is exhausted. It is connected to the remainder of the circuit by means of a switch 31.

It is a noteworthy fact that with several double-acting switches or several pairs of single-acting switches it is possible to monitor as many positions at any desired angle by providing suitable sensors blocks 11-111 positioned at an angle to each other in a pre-determined manner, as shown in Fig.8 for instance.

According to that embodiment there will always be only one pair of contacts 15 simultaneously open or simultaneously closed.

It will therefore be enough to made the information flow together to multiple gates of an OR or AND type so as to be able to make use of the only command logic relating to the embodiment by means of one single double-acting mercury switch or one single pair of single-acting mercury switches.

According to the form of embodiment shown in Fig.11 the device according to the invention comprises a board 36 made of a generally resilient material, on the upper surface of which are borne, on one side and the other of a central zone of the board, two series of conductor plates 37 respectively, each of which is electrically insulated from the adjacent plate and plates.

Such plates are connected alternatively to the positive pole of the electricity supply source and to luminous diodes 38 respectively.

A metallic ball 39 runs on guides (not shown here) on the board 36 and, by its movement, connects electrically two adjacent plates 37 connected respectively to a diode 38 and to the electricity supply, so that the diode 38 emits a luminous signal that indicates the spatial position of the ball 39.

When the ball 39 becomes positioned in the central zone of the board 36, a mercury switch 15 forming part of a device according to the invention becomes actuated and an acoustic signalling device emits a buzz.

## Claims

1 - Automatic device (10) to indicate the horizontal position, which can indicate a horizontal or vertical position or a position at a pre-determined angle and can perform the functions of a level tube, being characterized in that it comprises in reciprocal cooperation:
- electricity supply means (14),
- sensor means (11) able to monitor a spatial position of the device (10) and to emit electrical signals according to that spatial position,
- means (12) to process the information coming from the sensor means (11), and
- acoustic and/or visual signalling means (13) which represent that spatial position.

2 - Automatic device (10) as claimed in Claim 1, in which the sensor means (11) comprise at least one mercury switch (15).

3 - Automatic device (10) as claimed in Claim 2, in which the sensor means (11) comprise a double-acting mercury switch (115).

4 - Automatic device (10) as claimed in Claim 2 or 3, in which such at least one mercury switch (15-115) cooperates with mechanical regulation means at the limit of switching.

5 - Automatic device (10) as claimed in Claim 4, in which the mechanical regulation means at the limit of switching comprise an inclined surface (19) having its inclination adjustable in relation to a body (21) of the level device.

6 - Automatic device (10) as claimed in any claim hereinbefore, in which the signalling means (13) are able to emit at least a luminous signal.

7 - Automatic device (10) as claimed in Claim 6, in which the signalling means (13) comprise two luminous segments (28-29) giving information regarding the positioning.

8 - Automatic device (10) as claimed in any claim herein before, in which the electricity supply means (14) comprise a cell and/or battery (30).

9 - Automatic device (10) as claimed in any claim hereinbefore, in which the information processing means (12) comprise at least one logic circuit the input of which is connected to the sensor means (11).

10 - Automatic device (10) as claimed in Claim 9, in which the logic circuit comprises descrete and/or integrated elements.

11 - Automatic device (10) as claimed in Claim 9 or 10, in which the information processing means comprise means (32-35) to control and regulate the luminous segments (28-29).

12 - Automatic device (10) as claimed in Claim 11, in which the control and regulation means (32-35) comprise at least one operational amplifier (32-33) and at least one potentiometer (34-35) the outputs of which are connected to the inputs of the luminous segments (28-29).

13 - Automatic device (10) as claimed in any claim hereinbefore, in which a low-pass filter (26) is located at the input of the information processing means (12).

14 - Automatic device (10) as claimed in any claim hereinbefore, in which the sensor means (11) are arranged at different angles, the information processing means (12) causing the emission of a signal only following upon a pre-determined logic combination of electrical signals coming from the sensor means (11), such logic combination representing a pre-determined spatial position of the device (10).

15 - Automatic device (10) as claimed in any of Claims 1 to 3 inclusive, which comprises also an elongated board (36) equipped with a series of conductor plates (37) located on one side and the other of a central zone of the board (36), the plates (37) being electrically insulated from the immediately adjacent plates and being connected alternately to the electricity supply means (14) and to visual signalling means (38), a ball (39) made of a conductive material being able to run on the board (36) and to connect two adjacent plates together electrically, the central zone of the board (36) being connected electrically to at least one sensor means (11).

fig.1

fig.3

fig.4

fig.2

0 292 875

fig.5

fig.6

fig.11

fig.7a

fig.7b

fig.7c

fig.8

HORIZONTAL = CONTACTS CLOSED

CONTACTS CLOSED LEV.1

CONTACTS OPEN LEV.0

| A | B | Y |
|---|---|---|
| 0 | 0 | 0 |
| 0 | 1 | 0 |
| 1 | 0 | 0 |
| 1 | 1 | 1* |

A — [AND] — Y
B

| A | B | Y |
|---|---|---|
| 0 | 0 | 1 |
| 0 | 1 | 1 |
| 1 | 0 | 1 |
| 1 | 1 | 0* |

A — [NAND] — Y
B

CONTACTS CLOSED LEV.0

CONTACTS OPEN LEV.1

| A | B | Y |
|---|---|---|
| 0 | 0 | 0* |
| 0 | 1 | 1 |
| 1 | 0 | 1 |
| 1 | 1 | 1 |

A — [OR] — Y
B

| A | B | Y |
|---|---|---|
| 0 | 0 | 1* |
| 0 | 1 | 0 |
| 1 | 0 | 0 |
| 1 | 1 | 0 |

A — [NOR] — Y
B

# fig.9

HORIZONTAL = CONTACTS OPEN

CONTACTS OPEN LEV.1

CONTACTS CLOSED LEV.0

| A | B | Y |
|---|---|---|
| 0 | 0 | 0 |
| 0 | 1 | 0 |
| 1 | 0 | 0 |
| 1 | 1 | 1* |

A — [AND] — Y
B

| A | B | Y |
|---|---|---|
| 0 | 0 | 1 |
| 0 | 1 | 1 |
| 1 | 0 | 1 |
| 1 | 1 | 0* |

A — [NAND] — Y
B

CONTACTS OPEN LEV.0

CONTACTS CLOSED LEV.1

| A | B | Y |
|---|---|---|
| 0 | 0 | 0* |
| 0 | 1 | 1 |
| 1 | 0 | 1 |
| 1 | 1 | 1 |

A — [OR] — Y
B

| A | B | Y |
|---|---|---|
| 0 | 0 | 1* |
| 0 | 1 | 0 |
| 1 | 0 | 0 |
| 1 | 1 | 0 |

A — [NOR] — Y
B

# fig.10